Europäisches Patentamt

European Patent Office

Office européen des brevets

(11) Veröffentlichungsnummer : **0 009 133**
**B1**

(12) **EUROPÄISCHE PATENTSCHRIFT**

(45) Veröffentlichungstag der Patentschrift :
**11.11.81**

(21) Anmeldenummer : **79103120.6**

(22) Anmeldetag : **24.08.79**

(51) Int. Cl.³ : **A 01 C 15/18, A 01 C 15/06**

(54) **Vorrichtung zum gleichmässigen Verteilen landwirtschaftlichen Streugutes, z.B. Düngemittel.**

(30) Priorität : **31.08.78 DE 2837929**

(43) Veröffentlichungstag der Anmeldung :
**02.04.80 (Patentblatt 80/07)**

(45) Bekanntmachung des Hinweises auf die Patenterteilung : **11.11.81 Patentblatt 81/45**

(84) Benannte Vertragsstaaten :
**AT BE CH FR GB IT LU NL SE**

(56) Entgegenhaltungen :
**DE - A - 2 122 198**
**DE - A - 2 225 347**
**DE - A1 - 2 526 953**
**DE - U - 1 988 805**
**DE - U - 6 800 433**

(73) Patentinhaber : **Hermann Rauch Fabrik landwirtschaftlicher Maschinen und Geräte KG**

**D-7573 Sinzheim (DE)**

(72) Erfinder : **Gail, Josef**
**Klausenweg 4**
**D-8891 Aichach-Unterwittelsbach (DE)**
Erfinder : **Rauch, Gerhard**
**Windener Weg 6**
**D-7573 Sinzheim (DE)**

(74) Vertreter : **Lichti, Hans, Dr. Ing. et al**
**Durlacher Strasse 31 Postfach 410760**
**D-7500 Karlsruhe 41 (Grötzingen) (DE)**

Imprimerie Jouve, 17, rue du Louvre, 75001 Paris, France

Vorrichtung zum gleichmäßigen Verteilen landwirtschaftlichen Streugutes, z.B. Düngemittel

Die Erfindung betrifft eine Vorrichtung zum gleichmäßigen Verteilen landwirtschaftlichen Streugutes, wie Düngemittel od. dgl., mit einem Vorratsbehälter, zwei an dessen Auslauf angeschlossenen, sich nach je einer Seite erstreckenden trogartigen Auslegern, je einem in diesen angeordneten endlosen Förderer mit Mitnehmern, dessen Obertrum über einem Zwischenboden läuft und das Streugut zum äußeren Ende der Ausleger fördert, und mit darunter umlaufenden, das Streugut verteilenden Austragsorganen.

Außer den seit langem bekannten Schleuderstreuern, bei denen das Streugut durch ein oder zwei unterhalb des Vorratsbehälters angeordnete Schleuderscheiben zentrifugal beschleunigt und abgeschleudert wird, sind auch sog. Bandstreuer bekannt geworden, bei denen ähnlich wie bei Sämaschinen das Streugut in großer Breite im wesentlichen durch Schwerkraft abgegeben wird. Mit diesen Bandstreuern wird in erster Linie eine gleichmäßigere Verteilung des Streugutes angestrebt, die sich allerdings nur mit einem gegenüber Schleuderstreuern größeren konstruktiven und damit kostenmäßigen Aufwand erreichen läßt. Ein solcher Bandstreuer baut nämlich wesentlich größer, die Austragseinrichtungen sind aufwendiger und schließlich müssen Vorkehrungen dafür getroffen werden, daß die weit ausladenden Ausleger für den Straßentransport in Fahrtrichtung ausgerichtet werden können (DE-A 25 03 777). Bandstreuer haben sich deshalb bisher nur in sehr beschränktem Umfang durchgesetzt.

Im einzelnen ist eine Vorrichtung bekannt (DE-A 22 25 347), bei welcher der Boden des trogartigen Auslegers von einem Trum des endlosen Förderers gebildet ist. An den Längsseiten des Trums sind hakenartige Austragsorgane angebracht, welche über die Seitenwandung des Trogs nach außen vorragen. Durch den Spalt zwischen den Seitenwänden des Trogs und dem Trum bzw. den Austragsorganen gelangt das Streugut nach außen. Mit dieser Vorrichtung läßt sich das Streugut nicht gleichmäßig verteilen, da sowohl das Fördern als auch das Austragen durch das gleiche Gerät geschieht. Bei Beginn der Förderung befindet sich außen noch kein Streugut, während in der Mitte schon ausgetragen wird. Eine bekannte Weiterentwicklung dieser Vorrichtung (DE-A 25 26 953) bei welcher der Förderer und die Austragsorgane getrennt ausgebildet sind und je einen eigenen Antrieb aufweisen, mag zwar eine Verbesserung hinsichtlich des Streuergebnisses bringen dies jedoch nur mit einem erheblichen konstruktiven Aufwand und einer erhöhten Störanfälligkeit.

Eine demgegenüber einfachere Vorrichtung (DE-U 19 88 805) weist einen Trog auf, dessen Boden mit Auslaufschlitzen versehen ist ; über diesen Boden laufen Mitnehmer, die am Untertrum einer Endloskette angebracht sind. Auch hier ergibt sich wieder eine sehr ungleichmäßige Verteilung, da zum Fördern und Austragen eine einzige Einrichtung dient.

Ein gutes Streuergebnis dürfte sich mit der eingangs angedeuteten Vorrichtung (DE-A 21 22 198) erreichen lassen, wiederum aber nur mit einem nicht vertretbaren konstruktiven Aufwand. Das Streugut gelangt zunächst auf das mit Querleisten versehene Obertrum einer Endloskette und wird bis zum äußeren Ende des Auslegers transportiert. Dort fällt es durch eine Öffnung im Zwischenboden in einen darunter befindlichen Trog, dessen Boden gleichmäßig verteilte Austragsöffnungen aufweist. Oberhalb des Bodens läuft eine Welle mit einer Vielzahl von Taumelscheiben um, die das Streugut wieder nach innen fördern, das zugleich durch die Austragsöffnungen nach unten durchfällt. Den Austragsöffnungen ist eine Schiebeblende zum Dosieren zugeordnet. Vor dem Beginn des Streuvorgangs muß der gesamte Trog gefüllt sein, wobei das Untertrum der Endloskette mit den Querleisten die Oberfläche der Streugut-Füllung bestreicht und nivelliert. Das am innern Ende des Trogs anfallende überschüssige Streugut wird durch einen Senkrechtförderer wieder in den Vorratsbehälter zurückgebracht. Der enorme Kostenaufwand liegt angesichts der notwendigen drei Förderer auf der Hand. Die « Leerlaufzeiten » sind groß, da mit dem Streuen erst begonnen werden kann, wenn überschüssiges Streugut wieder zurückgefördert wird. Im übrigen ist auch hier die Verteilung ungleichmäßig, da beispielsweise bei Erschütterungen, mit denen immer gerechnet werden muß, größere Mengen durch die Öffnungen herausfallen als bei ruhigem Lauf. Allen vorgenannten Vorrichtungen haftet mehr oder weniger der Nachteil an, daß das Streugut zu stark gestaut wird.

Der Erfindung liegt die Aufgabe zugrunde, eine Streuvorrichtung so auszubilden, daß mit nur einem Förderer eine gleichmäßige Verteilung des Streugutes über die gesamte Arbeitsbreite bei geringstmöglicher « Leerlaufzeit » erreicht wird.

Ausgehend von der eingangs angedeuteten und zuvor gewürdigten Vorrichtung wird diese Aufgabe dadurch gelöst, daß der Zwischenboden in gleichmäßigem Abstand Durchtrittsöffnungen aufweist, und daß unterhalb des Zwischenbodens eine Rinne angeordnet ist, in der die als Austragsorgane dienenden, fingerartigen Mitnehmer des Untertrums umlaufen und deren Längsränder Überlaufkanten für das von den Mitnehmern verdrängte Streugut bilden.

Der Kern der Erfindung besteht darin, daß nur ein Längsförderer für jeden Ausleger vorgesehen ist, der zwei Funktionen übernimmt. Das Obertrum fördert mit seinen Mitnehmern das Streugut von der innen liegenden Aufgabestelle unterhalb des Vorratsbehälters nach außen, wobei das Streugut durch die Durchtrittsöffnungen im Zwischenboden auf die Rinne fällt. Dort wird es von den Mitnehmern des Untertrums erfaßt und — durch deren fingerartige Ausbildung — nicht in Laufrichtung verschoben, sondern nur gleichmäßig in der Rinne verteilt. Ist die Rinne bis zu den Überlaufkanten gefüllt, so wird das Streugut beim Durchlauf der Mitnehmer über die Überlaufkanten verdrängt und fällt in gleichmäßiger Verteilung auf die Anbaufläche. Der Förderer ist also nicht nur Transport- sondern zugleich auch Verteilereinrichtung.

Zu Stauungen und Verstopfungen, welche die Verteilung beeinträchtigen kann es nicht kommen, da sich in der Rinne unter den Durchtrittsöffnungen nur einzelne Häufchen bilden, die — sobald sie die Höhe des Zwischenbodens erreicht haben — den weiteren Durchtritt des Streugutes verhindern. Stauungen im Obertrum beeinträchtigen die Verteilung nicht, sondern führen nur dazu, daß aus dem Vorratsbehälter nichts mehr abgezogen wird.

Gemäß einer bevorzugten Ausführungsform ist dem Zwischenboden mit den Durchtrittsöffnungen in an sich bekannter Weise (DE-A 21 522 198) ein Schieber zum Verändern des Durchtrittsquerschnitts zugeordnet. Dieser Schieber kann zwar, wie beim Stand der Technik, zum Dosieren der Durchtrittsmenge verwendet werden, dient jedoch bevorzugt dazu, vor Beginn des Streuens die Durchtrittsöffnungen vollständig zu verschließen, bis das Streugut bis zum äußeren Ende des Auslegers gefördert worden ist und in ausreichender Schichthöhe oberhalb des Zwischenbodens liegt, während sich in der Rinne noch kein Streugut befindet. Nach Öffnen des Schiebers fällt das Streugut gleichmäßig in die Rinne, wird verteilt und läuft schließlich über. Damit wird in Verbindung mit dem geringen Hohlraumvolumen der Rinne die « Leerlaufzeit » gering gehalten.

Bevorzugte Ausführungsbeispiele sind in den weiteren Unteransprüchen gekennzeichnet. Mit den Merkmalen der Ansprüche 3 bis 5 wird die Streugutmenge, die über die Überlaufkanten tritt, begrenzt bzw. dosiert, während die Ansprüche 6 bis 8 eine konstruktiv besonders einfache Ausführungsform angeben. Die Merkmale des Anspruchs 9 sorgen dafür, daß das Streugut nicht am äußeren Ende des Auslegers beim Aufstauen verdichtet wird. Die Merkmale der Ansprüche 10 und 11 unterstützen die gleichmäßige Verteilung des Streugutes in der Rinne, während Anspruch 12 ein Ausführungsbeispiel angibt, bei dem die bewegten Teile, nämlich der Förderer, auf seiner gesamten Länge, für Inspektionen oder Reparaturen leicht zugänglich ist. Die Ansprüche 13 und 14 geben wiederum eine besonders einfache Gestaltung in konstruktiver und werkstofftechnischer Hinsicht an, welche eine Aufteilung zwischen tragenden und nicht tragenden Teilen bezweckt und zwischen chemisch beanspruchten (durch aggressive Düngemittel) und nicht beanspruchten Teilen unterscheidet. Schießlich ist mit den Merkmalen des Anspruchs 15, wie die Praxis gezeigt hat, eine einfache Möglichkeit zur Einstellung der ausgetragenen Streugutmenge gegeben.

Nachstehend ist die Erfindung an Hand eines in der Zeichnung dargestellten Ausführungsbeispiels beschrieben. In der Zeichnung zeigen :

Figur 1   eine Rückansicht der Vorrichtung in schematischer Darstellung ;

Figur 2   einen Querschnitt durch einen Ausleger und

Figur 3   eine Draufsicht auf das Obertrum des Förderers im Ausschnitt.

Die Vorrichtung besteht im wesentlichen aus einem Vorratsbehälter 1 für das Düngemittel und je einem an dessen Auslass angeschlossenen trogartigen Ausleger 2, 3, die nach außen in der gewünschten Streubreite ausladen. Beim wiedergegebenen Ausführungsbeispiel ist der Vorratsbehälter 1 zweiteiligausgebildet, wobei dem Behälter 4 der Ausleger 2 und dem Behälter 5 der Ausleger 3 zugeordnet ist. Der Vorratsbehälter 1 kann beispielsweise an dem Dreipunkt-Gestänge eines Schleppers angebracht oder auch an einer andersartigen Zugmaschine aufgesattelt sein. Um die Vorrichtung auch auf der Straße verfahren zu können, sind die Behälter 4,5 um seitliche Achsen 6,6a zusammen mit dem jeweiligen Ausleger um 90° schwenkbar der Art, daß die Ausleger 2,3 in Fahrtrichtung verlaufen. Durch die Zweiteilung des Behälters und die seitliche Lagerung ergibt sich der Vorteil, daß die Streueinrichtung einfach durch Umklappen der Behälter — ohne daß deren Auslass verschlossen werden muß — für den Straßentransport hergerichtet werden kann.

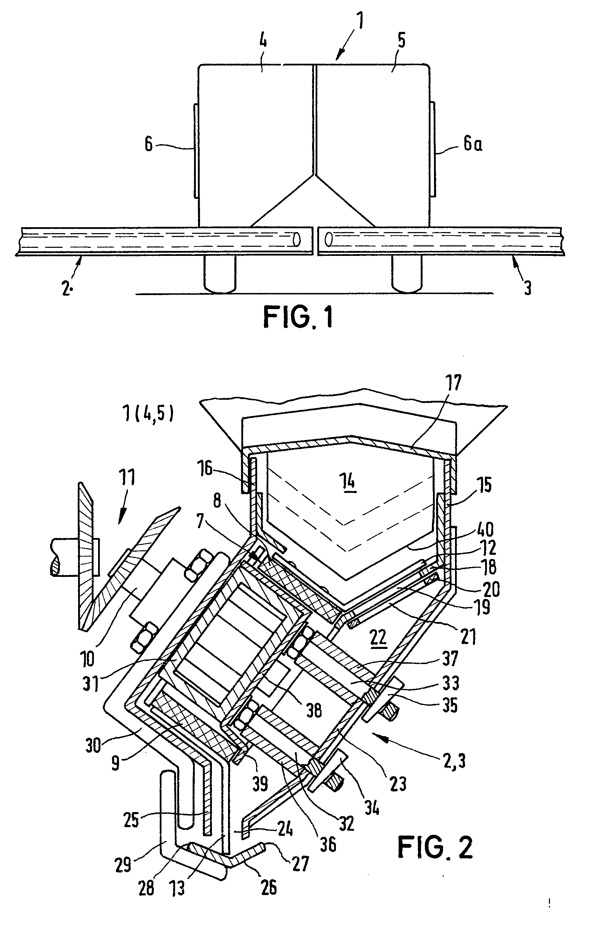

Wie aus Figur 2 zu ersehen, ist jeder Ausleger nach Art eines länglichen Kastens ausgebildet. Innerhalb des Auslegers läuft ein Bandförderer 7 in Längsrichtung um. Der Förderer 7 weist ein Obertrum 8 und ein Untertrum 9 auf und kann beispielsweise als Zahnriemen mit innenseitiger Antriebsverzahnung ausgebildet sein. Die Antriebsachse 10 jedes Förderers ist geneigt angeordnet und wird beispielsweise von der Zapfwelle eines Schleppers über ein nicht gezeigtes, vorzugsweise stufenlos verstellbares Getriebe sowie einen Kegelradsatz 11 angetrieben.

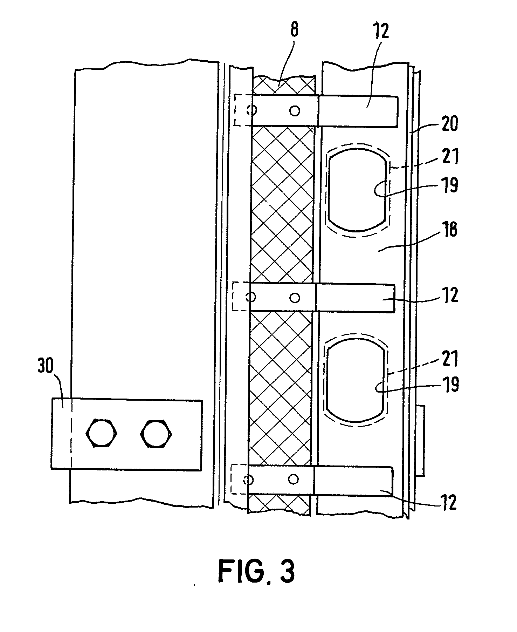

An dem Förderer 7 sind über dessen gesamte Länge Mitnehmer 12, 13 befestigt, die gegenüber dem Band im Komplementärwinkel des Neigungswinkels der Antriebsachse 10 abgebogen sind. Diese Mitnehmer sind fingerartig ausgebildet und beispielsweise aus schmalen Blechleisten (s. Fig. 3) hergestellt. Der Neigungswinkel der Antriebsachse 10 bzw. der Mitnehmer 12, 13 gegenüber dem Ober- bzw. Untertrum 8, 9 ist so gewählt, daß die Mitnehmer 13 des Untertrums 9 etwa senkrecht verlaufen.

Der Ausleger 2, 3 weist im oberen Bereich einen Trog 14 auf, der aus seitlichen Begrenzungswänden 15, 16, gegebenenfalls einem Deckel 17 und einem V-förmigen Boden besteht. Die geneigten Bodenflächen werden einerseits vom umlaufenden Obertrum 8 der Förderers, andererseits von einem in den Ausleger eingezogenen Zwischenboden 18 gebildet, der in gleichem Abstand hintereinander eine Vielzahl von Durchtrittsöffnungen 19 aufweist. Unmit-

telbar oberhalb des Zwischenbodens laufen die Mitnehmer 12 am Obertrum 8 der Förderers 7. Unterhalb des Zwischenbodens 18 ist ein längsbeweglicher Schieber 20 angeordnet, der gleichfalls Öffnungen 21 besitzt. Mittels des Schiebers kann der freie Querschnitt der Durchtrittsöffnungen 19 eingestellt bzw. vollständig verschlossen werden.

Unterhalb des Zwischenbodens 18 schließt sich ein Schacht 22 an, der von einer Längswand 23 begrenzt ist, die ihrerseits schräg verläuft und eine Art Rutsche bildet. Der Schacht endet in einem Austragsspalt 24, der einerseits durch die schräge Längswand 23, andererseits durch die gegenüberliegende Wandung 25 des Auslegers begrenzt wird. Unterhalb des Austragsspaltes 24 ist eine V-förmige Rinne 26 angeordnet. Die Mitnehmer 13 am Untertrum 9 des Förderers 7 greifen bis etwa in der Grund der Rinne 26 ein. Die Rinne 26 bildet an ihren Längsrändern Überlaufkanten 27, 28.

Beim wiedergegebenen Ausführungsbeispiel ist die Rinne 26 über Winkeleisen 29 an Laschen 30 aufgehängt. Diese Aufhängung ist höhenverstellbar, indem beispielsweise die Winkeleisen 29 gegenüber den Laschen 30 nach oben bzw. unten verschiebbar sind. Hierzu kann eine einfache Befestigungsschraube mit Langloch dienen.

Der Ausleger 2, 3 und die Rinne 26 mit ihrer Aufhängung 29, 30 sind an einem innenliegenden rechteckigen Trägerrohr 31 befestigt, das aus herkömmlichem Konstruktionsstahl bestehen kann. Das Trägerrohr 31 nimmt auch die Lagerung der Antriebs- bzw. Umlenkräder des Förderers 7 auf. An dem Trägerrohr 31 kann die Längswand 23 des Schachtes 22 über Distanzbolzen 32, 33 und einfache Keilverschlüsse 34, 35 befestigt sein. Durch Lösen der Keile kann die Längswand 23 abgenommen werden, so daß der Ausleger, insbesondere der Förderer 7 zugänglich ist. Alle mit dem Düngemittel in Berührung kommenden Teile, also die Seitenwände 15, 16 sowie der Deckel 17 des oberen Trogs, die Längswand 23 des Schachtes 22 und die andere Begrenzungswand des Auslegers, der Zwischenboden 18 und der Schieber 21 bestehen mit Vorteil aus einem korrosionsbeständigen Werkstoff, z.B. aus einem Chrom-Nickel-Stahl. Aus Gründen des Korrosionsschutzes sind auch die Stehbolzen 32, 33 von korrosionsbeständigen Distanzhülsen 36, 37 umgeben. Aus dem gleichen Grund ist das Trägerrohr 31 zum Schacht 22 hin durch ein korrosionsbeständiges Blech 38 abgedeckt, dessen Unterkante im übrigen zu einer Spurleiste 39 für das Untertrum 9 der Förderers 7 verformt ist.

· In den Innenraum des oberen Trogs 14 reichen mehrere im Abstand voneinander angeordnete Staubleche 40, die beispielsweise am Deckel 17 des Trogs angebracht sind. Die Eingriffstiefe der Staubleche 40 nimmt, wie dies mit gestrichelten Linien angedeutet ist, von innen nach außen zu.

Das Streugut gelangt aus dem Vorratsbehälter 1 bzw. den Einzelnbehältern 4, 5 durch einen Auslass in den oberen Trog 14 nahe dem inneren Ende des Auslegers 2, 3. Das Streugut wird von den Mitnehmern des nach außen laufenden Obertrums 8 des Förderers 7 über dem Zwischenboden 18 verteilt und zum äußeren Ende des Auslegers gefördert. Vor dem Beginn des Ausstreuens ist der Schieber 20 in eine Stellung gebracht worden, bei der er die Durchtrittsöffnungen 19 im Zwischenboden 18 verschließt. Ist das Streugut am äußeren Ende des Auslegers 2, 3 angelangt, so wird der Schieber 20 geöffnet, so daß das Streugut durch die Durchtrittsöffnungen hindurch in den Schacht 22 fällt und auf der schrägen Längswand 23 des Schachtes zum Austragsspalt 24 rutscht. Durch diesen tritt das Streugut in die Rinne 26 ein. Die in der Rinne 26 laufenden Mitnehmer 13 am Untertrum 9 des Förderers 7 verdrängen das Streugut nach beiden Seiten, so daß das Streugut nach Erreichen eines entsprechenden Füllungsgrades über die Überlaufkanten 27, 28 läuft und in gleichmäßiger Verteilung auf den Boden fällt. Bei Fahrt auf horizontaler Fläche tritt das Streugut über beide Überlaufkanten 27, 28, während bei Fahrt auf geneigtem Gelände das Streugut nur über eine Kante austritt.

Die Streumenge läßt sich einerseits durch Verstellung des Schiebers 20, vorallem aber durch das eingangs erwähnte stufenlos verstellbare Getriebe, welches die Umlaufgeschwindigkeit des Förders steuert, verändern.

## Ansprüche

1. Vorrichtung zum gleichmäßigen Verteilen landwirtschaftlichen Streugutes, wie Düngemittel od. dgl., mit einem Vorratsbehälter (1), zwei an dessen Auslauf angeschlossenen, sich nach je einer Seite erstreckenden trogartigen Auslegern (2, 3), je einem in diesen angeordneten endlosen Förderer (7) mit Mitnehmern (13), dessen Obertrum (8) über einem Zwischenboden (18) läuft und das Streugut zum äußeren Ende der Ausleger fördert, und mit darunter umlaufenden, das Streugut verteilenden Austragsorganen, dadurch gekennzeichnet, daß der Zwischenboden (18) in gleichmäßigem Abstand Durchtrittsöffnungen (19) aufweist und daß unterhalb des Zwischenbodens (18) eine Rinne (26) angeordnet ist, in der die als Austragsorgane dienenden, fingerartigen Mitnehmer (13) des Untertrums (9) umlaufen und deren Längsränder Überlaufkanten (27, 28) für das von den Mitnehmern (13) verdrängte Streugut bilden.

2. Vorrichtung nach Anspruch 1, dadurch gekennzeichnet, daß dem Zwischenboden (18) mit den Durchtrittsöffnungen (19) ein Schieber (20) zum Verändern des Durchtrittsquerschnittes zugeordnet ist.

3. Vorrichtung nach Ansprch 1 oder 2, dadurch gekennzeichnet, daß die Rinne (26) V-förmig ausgebildet ist und die Mitnehmer (13) nach Art von Zinken in den Grund der Rinne (26) eingreifen.

4. Vorrichtung nach einem der Ansprüche 1 bis 3, dadurch gekennzeichnet, daß der freie Querschnitt oberhalb der Überlaufkanten (27, 28) der Rinne (26) durch längs laufende Staubleche (23, 25) begrenzt ist.

5. Vorrichtung nach einem der Ansprüche 1 bis 4, dadurch gekennzeichnet, daß die Rinne (26) gegenüber den längs laufenden Staublechen zur Veränderung des freien Querschnitts an dem Ausleger (2, 3) höhenverstellbar (29, 30) gehalten ist.

6. Vorrichtung nach einem der Ansprüche 1 bis 5, dadurch gekennzeichnet, daß der trogartige Ausleger (2, 3) unterhalb des Zwischenbodens (18) einen sich über gesamte Länge erstreckenden Austragsspalt (24) aufweist, unterhalb dessen die Rinne (26) angeordnet ist, dessen Begrenzungswände (23, 25) die längs laufenden Staubleche bilden und durch den die Mitnehmer (13) am Untertrum (9) des endlosen Förderers (7) etwa mittig hindurchgreifen.

7. Vorrichtung nach einem der Ansprüche 1 bis 6, dadurch gekennzeichnet, daß der Ausleger (2, 3) einen oberen, an den Auslaß des Vorratsbehälters (4, 5) angeschlossenen Trog (14) mit V-förmigem Boden aufweist, dessen eine geneigte Bodenfläche von dem Obertrum (8) des Förderers (7), z.B. einem Zahnriemen, und dessen andere geneigte Bodenfläche von dem Zwischenboden (18) mit den Durchtrittsöffnungen (19) gebildet ist, wobei die Mitnehmer (12) die eine Längsseite des Obertrums (8) überragen und gegenüber diesem parallel zum Zwischenboden (18) abgebogen sind.

8. Vorrichtung nach einem der Ansprüche 1 bis 7, dadurch gekennzeichnet, daß der Förderer (7) um geneigte Achsen (10) umläuft, deren Neigungswinkel dem Neigungswinkel der von dem Obertrum (8) gebildeten Bodenfläche des oberen Trogs (14) entspricht, wobei dieser Neigungswinkel so bemessen ist, daß die Mitnehmer (13) um Untertrum (9) etwa senkrecht stehen.

9. Vorrichtung nach einem der Ansprüche 1 bis 8, dadurch gekennzeichnet, daß in den oberen Trog (14) von oben her Staubleche (40) hineinragen, die quer zur Förderrichtung angeordnet sind und deren Eingriffstiefe zum Ende des Auslegers (2, 3) zunimmt.

10. Vorrichtung nach einem der Ansprüche 1 bis 9, dadurch gekennzeichnet, daß unterhalb des Zwischenbodens (18) ein Schacht (22) angeordnet ist, der an seinem unteren Ende den Austragsspalt (24) aufweist, wobei dieser gegenüber dem Zwischenboden (18) unter Anpassung an den Neigungswinkel der Umlaufachsen (10) der Förderers (7) versetzt ist.

11. Vorrichtung nach einem der Ansprüche 1 bis 10, dadurch gekennzeichnet, daß der Schacht (22) eine vom Zwischenboden (18) zu dem demgegenüber versetzten Austragsspalt (24) geneigt verlaufende, eine Art Rutsche bildende Längswand (23) aufweist.

12. Vorrichtung nach einem der Ansprüche 1 bis 11, dadurch gekennzeichnet, daß die Längswand (23) des Schachtes (22) an dem Ausleger (2, 3) lösbar (32 bis 37) befestigt ist.

13. Vorrichtung nach einem der Ansprüche 1 bis 12, gekennzeichnet durch ein sich über die Länge des Auslegers (2, 3) erstreckendes Trägerrohr (31) mit Rechteckquerschnitt, an dem die Achsen (10) bzw. die Antriebswelle des Förderers (7) gelagert und an dem der obere Trog (14), der Schacht (22) und die Halterung (29, 30) für die Rinne (26) befestigt sind.

14. Vorrichtung nach einem der Ansprüche 1 bis 13, dadurch gekennzeichnet, daß zumindest das Trägerrohr (31) aus normalem Konstruktionsstahl und alle dem Düngemittel in Kontakt kommenden Teile des Auslegers (2, 3) aus einem korrosionsbeständigen Werkstoff bestehen.

15. Vorrichtung nach einem der Ansprüche 1 bis 4, dadurch gekennzeichnet, daß der Förderer (7) über ein stufenlos regelbares Getriebe mechanischer oder hydraulischer Art angetrieben ist.

**Claims**

1. An apparatus for the even distribution of materials such as fertilizers with a supply box (1) for the material, two trough-like booms (2, 3) running out each on one side of the box from an outlet of the same, an endless conveyor (7), placed in each case, in one of the booms, the conveyors having driving dogs (13) and having upper runs (8) for running over inner floor structures (18) for conveying said material outwards towards the outer ends of the booms and with pushing out part placed thereunder for causing distribution of the material, said pushing out parts moving along an endless part, characterized in that the inner floor structure (18) has evenly spaced openings (19) for the material to make its way through and in that under the inner floor structure (18) there is a gutter (26), in which the finger-like dogs (13) used for pushing out the material, of the conveyors of the lower run (9) are moved in endless paths, the lengthways edges of the gutter having sides (27, 28) over which the material is forced by the dogs (13).

2. An apparatus as claimed in claim 1, characterized in that the inner floor structure (18) with the openings (19) has a slide (20) for changing the size of the openings (19).

3. An apparatus as claimed in claim 1 or claim 2, characterized in that the gutter (26) is V-like in form and in that the dogs (13) are designed running downwards like tines as far as the floor of the gutter (26).

4. An apparatus as claimed in anyone of claims 1 to 3, characterized in that the free cross-section above the edges (27, 28) (over which the material is pushed) of the gutter (26) is limited by projecting plates (23, 25) running along the length of the gutter (26).

5. An apparatus as claimed in anyone of claims 1 to 4, characterized in that the gutter (26) is so supported in relation to the projecting plates running in the length direction, that it may be changed in height (29, 30) for changing the free cross-section, at the booms (2, 3).

6. An apparatus as claimed in anyone of claims 1 to 5, characterized in that the trough-like boom (2, 3) has under the inner floor structure (18) an outlet opening (24), running along the full length, the gutter (26) being placed under the opening (24), the limiting walls (23, 25) of the opening (24) forming the projecting plates, running in the length direction, the driving dogs (13) of the lower run (9) of the endless conveyor (7) running generally through the middle of the opening (24).

7. An apparatus as claimed in anyone of claims 1 to 6, characterized in that the boom (2, 3) has an upper trough (14) (joined up with outlet of the supply box (4, 5)) with a V-like lower wall, of which one sloping lower wall face is formed by the top run (8) of the conveyor (7) in the form for example of a tooth-belt, and whose other sloping lower wall face is formed by the inner floor structure (18) with the openings (19) therethrough, and the dogs (12) are designed running out past one lengthways edge of the top run (8) and are bent downwards in relation to the same parallel to the inner floor structure (18).

8. An apparatus as claimed in anyone of claims 1 to 7, characterized in that the conveyor (7) is run about sloping shafts (10), whose angle of slope is the same as the angle of slope of the lower wall face formed by the top run (8), of the top trough (14), and this angle of slope is of such a size that the dogs (13) on the lower run (9) are generally upright.

9. An apparatus as claimed in anyone of claims 1 to 8, characterized in that projecting plates (40) are placed running downwards into the top trough (14), the plates (40) being normal to the direction of transport, the depth to which they are placed in trough increasing towards the end of the boom (2, 3).

10. An apparatus as claimed in anyone of claims 1 to 9, characterized in that under the inner floor structure (18) there is a shaft (22), having at its lower end the outlet opening (24), which is out of line with respect to the inner floor structure (18) so as to correspond of the slope angle of the shafts (10) about which the conveyor (7) is turned.

11. An apparatus as claimed in anyone of claims 1 to 10, characterized in that the shaft (22) has a lengthways-running wall (23) running slopingly from the inner floor structure (18) to the outlet space (24) out of line with it, the wall (23) forming a sort of slide.

12. An apparatus as claimed in anyone of claims 1 to 11, characterized in that the lengthways-running wall (23) of the shaft (22) may be undone (32 to 37) from the boom (2, 3).

13. An apparatus as claimed in anyone of claims 1 to 12, characterized by a support tube (31) stretching along the length of the boom (2, 3) and having a rectangular cross-section and on which the shaft (10) and the driving shaft of the conveyor (7) are supported and on which the upper trough (14), the shaft (22) and the support system (29, 30) for the gutter (26) are fixed.

14. An apparatus as claimed in anyone of claims 1 to 13, characterized in that at least the support tube (31) is made up of normal low carbon steel and all parts, coming into contact with the fertilizer, of the boom (2, 3) are made of a corrosion-resistant material.

15. An apparatus as claimed in anyone of claims 1 to 14, characterized in that the conveyor (7) is powered by a steplessly controlled mechanical or hydraulic driving system.

**Revendications**

1. Epandeuse agricole pour épandre uniformément des matières, telles que des engrais ou autres, sur le sol dans les exploitations agricoles, munie d'un magasin (1), de deux bras profilés en U (2, 3), raccordés à la sortie de ce magasin et s'étendant de part et d'autre, d'un transporteur sans fin (7) muni d'entraîneurs (13), dont chacun est disposé dans un de ces deux bras, transporteur dont le brin supérieur (8) se déplace sur un fond intermédiaire (18) et transporte les matières à épandre vers l'extrémité extérieure des bras, et en dessous d'organes d'épandage destinés à répartir les matières à épandre, caractérisée en ce que ledit fond intermédiaire (18) présente des ouvertures de passage régulièrement espacées (19) et qu'en dessous de ce fond intermédiaire (18) est prévue une gouttière (26), dans laquelle se déplacent les doigts entraîneurs (13) du brin inférieur (9) faisant office d'éparpilleurs et dont les bords longitudinaux (27, 28) agissent en guise de bords déverseurs pour les matières à épandre, refoulées par les entraîneurs (13).

2. Epandeuse selon la revendication 1, caractérisée en ce que ledit fond intermédiaire (18) à ouvertures de passage (19) est muni d'un tiroir (20) permettant le réglage de la section de passage.

3. Epandeuse selon la revendication 1 ou 2, caractérisée en ce que ladite gouttière (26) est profilée en V et que lesdits entraîneurs prennent à la manière de pointes dans le fond de la gouttière (26).

4. Epandeuse selon l'une ou l'autre des revendications 1-3, caractérisée en ce que la section libre est, au-dessus desdits bords déverseurs (27, 28) de la gouttière (26), limitée par des plaques de refoulement longitudinales (23, 25).

5. Epandeuse selon l'une ou l'autre des revendications 1-4, caractérisée en ce que ladite gouttière (26) est fixée auxdits bras (2, 3) avec possibilité de réglage en hauteur (29, 30) par rapport auxdites plaques de refoulement longitudinales, en vue du réglage de la section libre de passage.

6. Epandeuse selon l'une ou l'autre des revendications 1-5, caractérisée en ce que chacun desdits bras en U (2, 3) présente en dessous dudit fond intermédiaire (18) une fente de sortie (24) s'étendant sur toute sa longueur, sous laquelle est disposée ladite gouttière (26), fente dont les parois limitatrices (23, 25) forment lesdites plaques de refoulement longitudinales et par laquelle, à peu près au niveau de son axe longitudinal, passent lesdits doigts entraîneurs (13) du brin inférieur (9) du transporteur sans fin (7).

7. Epandeuse selon l'une ou l'autre des revendications 1-6, caractérisée en ce que chacun desdits bras (2, 3) présente une cuvette (14) raccordée à la sortie dudit magasin (4, 5) et munie d'un fond profilé en V, dont une des parois obliques est formée par le brin supérieur (8) dudit transporteur (7), qui se présente par exemple sous forme d'une courroie dentée, et l'autre paroi oblique est formée par ledit fond intermédiaire (18) à ouvertures de passage (19), et cela de manière que les entraîneurs (12) dépassent un des bords longitudinaux du brin supérieur (8), par rapport auquel ils sont recourbés parallèlement audit fond intermédiaire (18).

8. Epandeuse selon l'une ou l'autre des revendications 1-7, caractérisée en ce que ledit transporteur (7) se meut autour d'axes inclinés (10), dont l'angle d'inclinaison correspond à celui du fond de la cuvette supérieure (14), formé par le brin supérieur (8), angle d'inclinaison qui est choisi de manière que lesdits entraîneurs (13) sont à peu près perpendiculaires au brin inférieur (9) du transporteur.

9. Epandeuse selon l'une ou l'autre des revendications 1-8, caractérisée en ce que des plaques de refoulement (40), qui sont disposées transversalement par rapport au transporteur et dont la profondeur de pénétration augmente vers l'extrémité du bras (2, 3), pénètrent de haut en bas dans ladite cuvette supérieure (14).

10. Epandeuse selon l'une ou l'autre des revendications 1-9, caractérisée en ce que sous le fond intermédiaire (18) est montée une cage (22), dont l'extrémité inférieure présente ladite fente de sortie (24), qui est décalée par rapport au fond intermédiaire (18) en vue de son adaptation à l'angle d'inclinaison des axes (10) des rouleaux de renvoi du transporteur (7).

11. Epandeuse selon l'une ou l'autre des revendications 1-10, caractérisée en ce que ladite cage (22) présente une paroi longitudinale s'étendant obliquement à partir du fond intermédiaire (18) jusqu'à ladite fente de sortie (24) décalée par rapport à ce dernier, et faisant office de glissière.

12. Epandeuse selon l'une ou l'autre des revendications 1-11, caractérisée en ce que la paroi longitudinale (23) de ladite cage (22) est fixée de manière démontable aux bras (2, 3).

13. Epandeuse selon l'une ou l'autre des revendications 1-12, caractérisée en ce qu'elle est équipée d'un caisson de support (31) à section rectangulaire s'étendant sur toute la longueur du bras (2, 3) et servant de support pour les axes (10) et l'arbre de commande (7) de la machine, caisson (31) auquel sont fixés ladite cuvette supérieure (14), ladite cage (22) et le support (29, 30) de ladite gouttière (26).

14. Epandeuse selon l'une ou l'autre des revendications 1-13, caractérisée en ce qu'au moins ledit caisson de support (31) est exécuté en de l'acier de construction normal et que toutes les parties des bras (2, 3) qui viennent en contact avec les matières à épandre, telles que des engrais ou autres, sont faites d'un matériau résistant à la corrosion.

15. Epandeuse selon l'une ou l'autre des revendications 1-14, caractérisée en ce que ledit transporteur (7) est commandé par l'entremise d'un système de transmission mécanique ou hydraulique.

FIG. 1

FIG. 2

FIG. 3